# EUROPÄISCHE PATENTANMELDUNG

(11) **EP 4 654 681 A1**
(43) Veröffentlichungstag der Anmeldung: **26.11.2025**
(21) Anmeldenummer: 25176084.9
(22) Anmeldetag: 13.05.2025
(51) Int. Cl.: H04W 52/02

(54) **VERFAHREN ZUM BETRIEB EINES ENERGIEAUTARKEN FUNKEMPFÄNGERS EINES GATEWAYS**

(30) Priorität: 22.05.2024 DE 102024114367; 20.08.2024 DE 102024123703
(71) Anmelder: Diehl Metering Systems GmbH, 90451 Nürnberg (DE)
(72) Erfinder: Weiss, Karolin, 90459 Nürnberg (DE); Petkov, Hristo, 90411 Nürnberg (DE); Kauppert, Thomas, 90455 Nürnberg (DE); Evers, Florian, 90766 Fürth (DE)
(74) Vertreter: Diehl Patentabteilung

(57) **Zusammenfassung**

Verfahren zum Betrieb eines energieautark betriebenen Funkempfängers (105) eines vorzugsweise stationären Gateways (100), wobei der Funkempfänger (105) Telegramme (204, 205, 206, 209) in Form von Bursts von mindestens einem Funcknoten (200), vorzugsweise einer Anzahl X von Funkknoten (200) eines Netzwerks (214) empfängt und der Funkempfänger (105) Empfangsfenster (207, 207a, 208, 208a) für den Empfang öffnet, wobei der Funkempfänger (105) für den energieautarken Betrieb von einer Batterie (109), vorzugsweise einer Longlife Batterie, und/oder von einer Photovoltaikzellenanordnung (111) mit elektrischer Energie versorgt wird, wobei der Funkempfänger (105) ein mindestens einen Microcontroller (105) umfassender Funkempfänger des SDR-Typs ist, bei dessen Empfangsbetrieb die vom Funkempfänger (105) empfangenen Funksignale in I/Q Daten (113) umgewandelt und die I/Q Daten 113 mittels Rechenzeit verursachender Algorithmen weiterverarbeitet werden, wobei trotz eines Empfangs von eingehenden Bursts oder Funksignalen durch den Funkempfänger (105) Rechenoperationen des Microcontrollers (105) bei Vorliegen vorher festgelegter Empfangsszenarien abgebrochen oder zumindest in ihrem Umfang reduziert werden.

## Beschreibung

Die vorliegende Erfindung betrifft ein Verfahren zum Betrieb eines energieautarken Funkempfängers eines vorzugsweise stationären Gateways gemäß dem Oberbegriff des Anspruchs 1. Insbesondere handelt es sich bei dem Gateway um ein sogenanntes LPWAN-Gateway, vorzugsweise um ein Gateaway für MIOTY^{®}, OMS Burst Mode^{®} oder R4^{®} Funktechnologie, welches als Datensammler eines Netzwerks von Funkknoten Daten in Form von Telegrammen von den einzelnen Funcknoten zu bestimmten Stichzeiten empfängt, diese speichert und je nach Bedarf an ein HeadEnd weiterleitet.

Die hier interessierenden Gateways sind vorzugsweise stationär, d.h. in einer festen Umgebung installiert. Bevorzugt werden derartige Gateways für den Empfang von Daten von Funkknoten in Zusammenhang mit loT-Anwendungen wie z.B. von Funkknoten einer "Smart City", von Funkknoten in Form von in Gebäuden installierter Zähler zur Erfassung des Verbrauchs eines Verbrauchsguts wie Wasser, Strom, Gas oder Wärme oder Funkknoten in Form von Aktoren eingesetzt. Ein LPWAN-Gateway soll eine große Reichweite haben jedoch lediglich einen verringerten Energiebedarf benötigen. Die hier in Rede stehenden LPWAN-Gateways werden in lizenzfreien Lizenzbändern meist unter standardisierten Verfahren (gesetzlichen Standards bzw. Normen oder Industrienormen) betrieben. Aufgrund der vielfältigen Übertragungen in lizenzfreien Frequenzbändern findet die Übertragung von Telegrammen nicht permanent, sondern lediglich zu bestimmten Stichzeiten statt. Zu diesen Stichzeiten öffnet das Gateway ein Empfangsfenster, um Telegramme von sich in Reichweite des Gateways befindlichen Funkknoten zu empfangen.

Für den energieautarken Betrieb eines Gateways sorgt eine Batterie in Form einer sogenannten Longlife Batterie, die einen Betrieb des Gateways über einen Zeitraum von mehreren Jahren, beispielsweise über einen Zeitraum von zehn Jahren, ermöglichen soll. Das Gateway verfügt deshalb über ein limitiertes Energiebudget, welches abhängig ist vom jeweiligen Ladezustand der Batterie. Dieses Energiebudget legt die Lebensdauer der Batterie fest. Aus Letzterer resultiert die Standzeit (Betriebszeit) des Gateways "im Feld". Aus diesem Grund soll der Funkempfänger des Gateways möglichst energieeffizient arbeiten. Daraus jedoch resultieren Einschränkungen für den Funkempfänger bezüglich der Frequenz sowie der Anzahl der Übertragungen, die mit dem Funkempfänger bearbeitet werden können, sowie Einschränkungen bezüglich der verbleibenden Laufzeit des Funkempfängers. Gleichzeitig soll die Empfangsreichweite des Funkempfängers ausreichend sein, damit sämtliche sich in Reichweite befindliche Funkknoten zuverlässig mit dem Gateway kommunizieren können. Es gibt somit bei energieautark betriebenen Gateways zwei gegenläufige Anforderungen, nämlich einerseits einen möglichst energieschonenden Betrieb, andererseits die Sicherstellung einer bleibenden sicheren Übertragung der Daten von den Funkknoten hin zum Gateway ohne Reichweiteneinbußen über die gesamte Standzeit des Gateways. Diese beiden Anforderungen zu vereinen ist bisher nicht im ausreichendem Maße gelungen.

### Aufgabe der vorliegenden Erfindung

Die Aufgabe der vorliegenden Erfindung besteht daher darin, ein gattungsgemäßes Verfahren zum Betrieb eines Gateways zur Verfügung zu stellen, welches ohne Einbußen hinsichtlich der Kommunikationsfähigkeit des Funkempfangs eine wirksame Einsparung des Verbrauchs an Energie ermöglicht.

### Lösung der Aufgabe

Die vorstehende Aufgabe wird durch die Merkmale des Anspruchs 1 gelöst. Zweckmäßige Ausgestaltungen der Erfindung werden in den abhängigen Ansprüchen beansprucht.

Bei dem erfindungsgemäßen Verfahren werden trotz eines Empfangs von eingehenden Bursts oder Funksignalen durch den Funkempfänger Rechenoperationen des Microcontrollers bei Vorliegen von mindestens einem vorher festgelegten Empfangsszenario abgebrochen oder zumindest in ihrem Umfang reduziert werden. Dies ist möglich, da der Funkempfänger des Software Defined Radio (SDR)-Typs eine auf Software-Berechnungen per Algorithmen beruhende Signalverarbeitung der empfangenen Funksignale durchführt. Der Empfangsbetrieb des Gateways geschieht nach der technischen Vorgabe, dass eine Berechnung nicht durchgeführt wird, obgleich eine Verarbeitung des Eingangssignals zwar möglich oder nach Maßgabe eines Standardbetriebs eines Industriestandards vorzunehmen wäre, hierdurch aber ein das Energiebudget übermäßig beanspruchendes Maß an Energie verursacht werden würde. Hierdurch kann einerseits das Energiebudget des Gateways über dessen gewünschte Standzeit eingehalten werden. Andererseits müssen keine Abstriche in der Kommunikationsfähigkeit des Funkempfangs, insbesondere bezüglich der Empfangsreichweite, gemacht werden.

Gemäß einer vorteilhaften Ausgestaltung der Erfindung kann eine Reduzierung des Umfangs von Rechenoperationen des mindestens einen Microcontrollers durch eine Reduzierung von dessen Rechenzeit erfolgen. Aufgrund der reduzierten Rechenzeit ergibt sich ein reduzierter Energieverbrauch.

Gemäß einer vorteilhaften Ausgestaltung der Erfindung können die Telegramme besondere Telegramme eines sogenannten Multi-Burst-Modes des Funkbetriebs sein. Hierbei kommen beim Funkempfänger im Standardbetrieb mehrere einzeln decodierbare jedoch inhaltsgleiche (mit einem identischen Payload versehene) bzw. redundante Telegramme an. Der Funkknoten wiederholt hierbei die zu übertragende Information in mehreren eigenständigen Bursts bzw. Telegrammen. Jeder Burst enthält eine Darstellung des zu übertragenden Payloads und kann deshalb individuell decodiert werden.

Gemäß einer vorteilhaften alternativen Ausgestaltung der Erfindung können die Telegramme vom Sender jeweils in Teildatenpakete aufgeteilt und nacheinander versendet werden, so dass die einzelnen Teildatenpakete jeweils als eigenständiger Burst beim Funkempfänger ankommen. Vorzugsweise weist das Telegramm mindestens 24 Teildatenpakete auf. Vorzugsweise findet im Sender vor der Übertragung der Teildatenpakete eine Forward Error Correction (FEC) bezüglich der Teildatenpakete statt.

Gemäß einer vorteilhaften Ausgestaltung der Erfindung kann als eine vorstehend beschriebene Maßnahme eine Reduzierung der Verarbeitung oder Nicht-Verarbeitung von "false positives" erfolgen. Ein "false positive" liegt vor, wenn vom Funkempfänger im Rahmen eines Algorithmus bei einer Überprüfung bezüglich eines eingehenden Signals zu Unrecht (false) eine - insbesondere binäre - Übereinstimmung von Kriterien (positive) erkannt wird, obwohl diese nicht gegeben ist. Das kann beispielsweise dann der Fall sein, wenn mit gleichem Frequenzband sendende Transmitter in der Nähe sind.

Gemäß einer vorteilhaften Ausgestaltung der Erfindung kann als eine vorstehend beschriebene Maßnahme eine vom Standardbetrieb abweichende Reduzierung der Verarbeitung oder Nicht-Verarbeitung von nicht oder nur teilweise lesbaren Telegrammen erfolgen. Dies kann insbesondere dann der Fall sein, wenn der Funkempfänger zwar ein Signal empfängt, es aber nicht mehr oder nur noch teilweise decodieren kann.

Gemäß einer vorteilhaften Ausgestaltung der Erfindung kann als eine vom Standardbetrieb abweichende Reduzierung der Verarbeitung oder Nicht-Verarbeitung von inhaltsgleichen (redundanten) Telegrammen erfolgen. Dies gilt insbesondere für den eingangs beschriebenen Multi-Burst-Mode.

Gemäß einer vorteilhaften Ausgestaltung der Erfindung kann als eine vom Standardbetrieb abweichende Reduzierung der Verarbeitung oder Nicht-Verarbeitung von Telegrammen bei zu niedrigem SNR erfolgen. Hierzu nimmt der Funkempfänger eine SNR-Schätzung vor. Sofern der geschätzte SNR-Wert unterhalb eines vorgegebenen Sollwerts liegt, wird das betreffende Telegramm nicht weiterverarbeitet oder zumindest keine vollständige Verarbeitung vorgenommen.

Gemäß einer vorteilhaften Ausgestaltung der Erfindung kann als eine vom Standardbetrieb abweichende Reduzierung der Verarbeitung oder Nicht-Verarbeitung von, vorzugsweise vom Funkempfänger zu erwartenden, kollidierenden Telegrammen mindestens zweier unterschiedlicher Funkknoten erfolgen. Hierzu setzt der Funkempfänger anhand der vorangegangenen Empfangsereignisse fest, wann ein Telegramm ankommen wird. Ergibt sich hierbei, dass mindestens zwei Telegramme gleichzeitig oder überlappend ankommen, startet der Funkempfänger die Verarbeitung der Telegramme nicht oder er bricht sie wieder ab. Dies trifft vor allem auf Telegramme unterschiedlicher Funkknoten zu, die gleichzeitig empfangen werden bzw. sich überlappen.

Gemäß einer vorteilhaften Ausgestaltung der Erfindung kann eine vom Standardbetrieb abweichende Reduzierung der Verarbeitung oder Nicht-Verarbeitung von Telegrammen von nicht interessierenden Funkknoten erfolgen. Hierzu kann der Funkempfänger die in dem Telegramm enthaltene ID des individuellen Funkknotens zur Entscheidung, ob das betreffende Telegramm von Interesse ist oder nicht, auswerten. Die ID befindet sich im sogenannter Header des betreffenden Telegramms oder Teildatenpakets. Wird beispielsweise eine ID von einem nicht interessierenden Funkknoten identifiziert, wird eine weitere Verarbeitung des Telegramms abgebrochen.

Gemäß einer vorteilhaften Ausgestaltung der Erfindung kann ein erster Mikrokontroller im oder am Frontend des Funkempfängers die empfangenen Funksignale in dem Funkempfänger in I/Q Daten umwandeln sowie einen I/Q Datenstrom erzeugen. Aus diesem I/Q Datenstrom können I/Q Daten zur Weiterverarbeitung mittels Rechenzeit verursachender Algorithmen in einem zweiten Mikrokontroller, vorzugsweise mittels eines Schalters, abgezweigt werden.

Gemäß einer vorteilhaften Ausgestaltung der Erfindung können einer kleiner und/oder stromsparender erster und/oder zweiter Mikrokontroller verendet werden.

Gemäß einer vorteilhaften Ausgestaltung der Erfindung können der erste und/oder zweite Mikrokontroller eine Taktfrequenz von weniger als 150 MHz aufweisen. Vorzugsweise kann der erste Mikrokontroller eine Taktfrequenz von gleich oder weniger als 80 MHz und der zweite Mikrokontroller eine Taktfrequenz von gleich oder weniger als 150 MHz aufweisen.

Gemäß einer vorteilhaften Ausgestaltung der Erfindung können der erste und/oder zweite Mikrokontroller bei einer Spannung von 1,8 V einen Strom von weniger als 34 mA ziehen. Vorzugsweise kann bei einer Spannung von jeweils 1,8 V der erste Mikrokontroller einen Strom von weniger als 10 mA und der zweite Mikrokontroller einen Strom von weniger als 34 mA ziehen.

Gemäß einer vorteilhaften Ausgestaltung der Erfindung kann in Abweichung vom Standardbetrieb eine Abtastung über in ihrer Breite reduzierte Empfangsfenster vorgenommen werden. Hierzu kann der Funkempfänger eine Zeit-Offset-Information aus einem vorher bereits empfangenen Telegramm nutzen, um beim Empfang eines zukünftigen Telegramms oder Teildatenpakets ein in seiner Breite reduziertes Empfangsfenster zu öffnen.

Gemäß einer vorteilhaften Ausgestaltung der Erfindung können in Abweichung vom Standardbetrieb des Multi-Burst-Modes von drei inhaltsgleichen Telegrammen nur zwei Telegramm oder nur ein Telegramm verarbeitet werden.

Gemäß einer vorteilhaften Ausgestaltung der Erfindung können die Telegramme in einem ISM-Frequenzband versendet werden. Bei einem ISM-Frequenzband handelt es sich um lizenzfreies Frequenzband.

Gemäß einer vorteilhaften Ausgestaltung der Erfindung können die Telegramme bzw. Funksignale im 868 MHz-Frequenzband versendet werden.

Gemäß einer vorteilhaften Ausgestaltung der Erfindung können die Telegramme als, vorzugsweise unterschiedlichen Frequenzkanälen zugeordnete, Teildatenpakete vom Funkempfänger sukzessive empfangen werden. Die vorstehend beschriebenen Maßnahmen gelten damit gleichermaßen auch für die Teildatenpakete.

Gemäß einer vorteilhaften Ausgestaltung der Erfindung weißt das Gateway keinen Rückkanal zum jeweiligen Funkknoten auf. Gehen beim Funkempfänger Telegramme ein, meldet das Gateway nicht an den jeweiligen Funkknoten zurück, ob der Empfang des Telegramms erfolgreich war oder nicht.

Gemäß einer vorteilhaften Ausgestaltung der Erfindung kann der Funkempfänger in einem Synchronmodus betrieben werden, bei dem der Zeitabstand zwischen zwei aufeinander folgenden Telegrammen oder Teildatenpaketen dem Funkempfänger bekannt ist. Der Zeitabstand kann dem Funkempfänger vorzugsweise durch eine Liste bzw. einen Lookup Table oder eine Formel bekannt sein.

Gemäß einer alternativen oder zusätzlichen vorteilhaften Ausgestaltung der Erfindung kann der Funkempfänger in einem Trackingmodus betrieben werden, bei dem ein Zeitpunkt oder mehrere Zeitpunkte, an dem bzw. denen ein Telegramm oder Teildatenpaket empfangen wurde, vom Funkempfänger benutzt wird, um einen nächsten Empfangszeitpunkt eines Telegramms oder Teildatenpakets desselben Senders zu bestimmen bzw. vorherzusehen. Außer zum gezielten Öffnen eines Empfangsfensters für kurze Zeit (vorzugsweise angepasst an die maximal mögliche Länge der Telegramme), empfängt der Funkempfänger nicht. Dadurch kann Energie ein gespart werden.

Gemäß einer weiteren alternativen oder zusätzlichen vorteilhaften Ausgestaltung der Erfindung kann der Funkempfänger in einem Akquisitionsmodus betrieben werden, bei dem ein Empfangsfenster geöffnet wird, ohne dass der Funkempfänger weiß, zu welchem Zeitpunkt Telegramme oder Teildatenpakete von einem Sender übertragen werden. Ein Empfangsfenster kann hierbei über einen Zeitraum geöffnet werden, der viel größer ist als die Telegramm- bzw. Teildatenpaketlänge. Die Information zu den Detektionszeitpunkten der Telegramme bzw. Teildatenpakete können im Trackingmodus verwendet werden.

### Beschreibung der Erfindung anhand von Ausführungsbeispielen

Zweckmäßige Ausgestaltungen des erfindungsgemäßen Verfahrens werden nachstehend anhand von Zeichnungsfiguren näher erläutert. Wiederkehrende Merkmale sind der Übersichtlichkeit halber lediglich einmal mit einem Bezugszeichen versehen. Es zeigen:
- Fig. 1: ein Beispiel eines Funknetzwerks, bei dem das erfindungsgemäße Verfahren Anwendung findet, in stark vereinfachter schematischer Darstellungsweise;
- Fig. 2: ein Beispiel eines Gateways, bei dem das erfindungsgemäße Verfahren Anwendung findet;
- Fig. 3: eine stark vereinfachte schematische Darstellung einer Reduzierung der Rechenzeit und somit des Energieverbrauchs durch Nicht-Verarbeitung von inhaltsgleichen (redundanten) Telegrammen;
- Fig. 4: eine stark vereinfachte schematische Darstellung einer Reduzierung der Rechenzeit und somit des Energieverbrauchs durch Nicht-Verarbeitung von nicht interessierenden Telegrammen;
- Fig. 5: eine stark vereinfachte schematische Darstellung einer Reduzierung der Rechenzeit und somit des Energieverbrauchs durch Reduzierung der Breite des Empfangsfensters;
- Fig. 6: eine stark vereinfachte schematische Darstellung einer Reduzierung der Rechenzeit und somit des Energieverbrauchs durch Nicht-Verarbeitung sich gegenseitig störender oder gestörter Telegramme;
- Fig. 7: eine stark vereinfachte schematische Darstellung eines SNR-Grenzwerts, bei dessen Unterschreitung bei einem Empfangssignal keine Rechenleistungen vorgenommen werden; sowie
- Fig. 8: eine stark vereinfachte schematische Darstellung der Aufteilung eines Telegramms in einzelne, nacheinander sowie über verschiedene Frequenzen versendete Teildatenpakete.

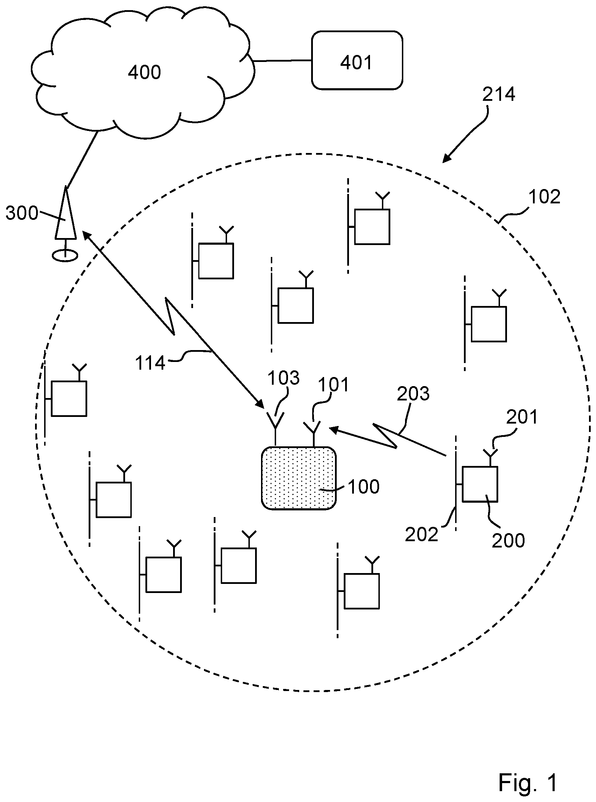

Fig. 1 zeigt ein Beispiel eines Netzwerks 214 einzelner stationär verteilt angeordneter Funkknoten 200. Die Funkknoten 200 sind dazu vorgesehen, "im Feld" Daten zu generieren und diese über einen eine Antenne 201 verfügenden Transmitter im Rahmen einer Uplink-Funkübertragung 203 an ein Gateway 100 bzw. einen Datensammler zu übertragen. Die einzelnen Funkknoten 200 sind hierbei energieautark ausgebildet, d.h. sie verfügen über eine (in Fig. 1 nicht dargestellte) nicht aufladbare Batterie, insbesondere eine Longlife Batterie. Eine solche Batterie ermöglicht es, dass die Funkknoten 200 im Feld über mehrere Jahre, z.B. über mindestens zehn Jahre, betrieben werden können, ohne dass deren Batterien ausgetauscht werden müssen.

Das Netzwerk 214 ist hierbei so konzipiert, dass die einzelnen Funkknoten 200 nicht permanent, sondern nur zu bestimmten Zeiten eine Uplink-Funkübertragung 203 hin zum Gateway 100 vornehmen und auch das Gateway 100 lediglich zu bestimmten Zeiten in eine Empfangsbereitschaft geht. Die Empfangsreichweite 102 des Gateways 100 ist in Fig. 1 durch einen Kreis symbolisiert.

Vorzugsweise kann es sich bei dem Netzwerk 214 um ein LPWAN-Netzwerk, z. B. um ein Netzwerk für MIOTY^{®}, OMS Burst Mode^{®} oder R4^{®} Funktechnologie handeln. Beispielsweise wird das Netzwerk 214 in einem ISM-Frequenzkanal betrieben. Hierbei handelt es sich um lizenzfreie Frequenzkanäle. Ein solcher lizenzfreier Frequenzkanal ist z.B. der 868 MHz-Frequenzkanal.

Bei den Funkknoten 200 handelt es sich zum Beispiel um Funkknoten einer "Smart City", die bestimmte Informationen über einen vor Ort existierenden Zustand, eine Befüllmenge, eine Verbrauchsmenge oder eine Einstellung einer Installation an das Gateway 100 übertragen. Das Netzwerk 214 bildet ein loT-Netzwerk. Besonders geeignet sind derartige Funkknoten 200 für die Erfassung von Verbrauchsmengen eines Versorgungsnetzes 202, z.B. Wasser, Elektrizität, Gas oder Wärme.

Die von dem Gateway 100 empfangenen Daten werden z.B. über eine Mobilfunkübertragung 114 an eine Cloud 400 übertragen und dort abgelegt. Die Cloud 400 steht wiederum mit einem HeadEnd 401 in Verbindung, welches die Daten wartet und weiterverarbeitet. Bei dem HeadEnd kann es sich um einen Betreiber eines entsprechenden Netzwerks handeln.

Zur Ermöglichung der Mobilfunkübertragung 114 verfügt das Gateway 100 über einen eine Mobilfunkantenne 103 aufweisenden Transmitter. Die Bezugsziffer 300 bezeichnet eine stationäre Mobilfunkempfangsstation.

Auch das Gateway 100 ist vorzugsweise stationär und wird ebenfalls mit einer autarken Energiequelle in Form einer Batterie 109 und/oder einer Photovoltaikzellenanordnung 111 betrieben. Die Herausforderung besteht somit darin, dass das komplette Netzwerk 214 mit allen innerhalb des Netzwerks 214 befindlichen Funcknoten 200 sowie auch das Gateway 100 so zu betreiben, dass über eine vorgegebene Standzeit, z.B. zehn Jahre, die Daten aller im Netzwerk 214 befindlicher Funkknoten 200 an das Gateway 100 übertragen werden und von dort weiterhin an die Cloud 400 bzw. das Head End 401 ausgegeben werden können. Hierzu bedarf es eines Managements des Energiebudgets der Knoten 200 sowie auch des Gateways 100.

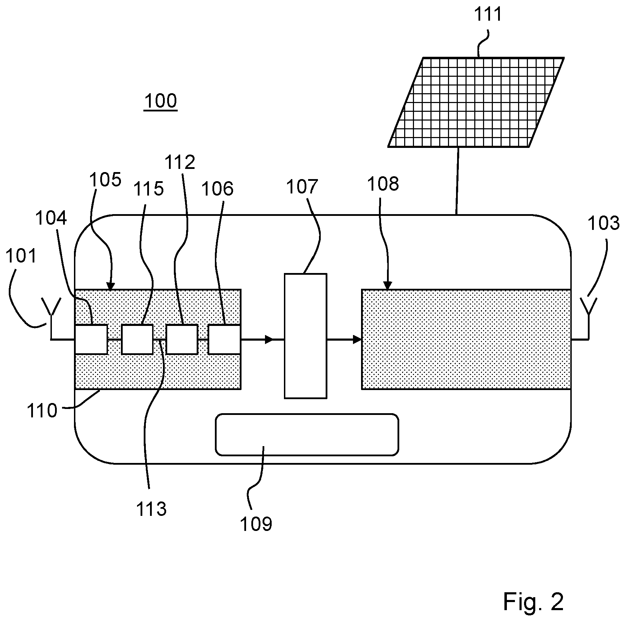

Fig. 2 zeigt in stark vereinfachter schematischer Darstellungsweise die wesentlichen Komponenten des Gateways 100. Das Gateway 100 verfügt über einen Funkempfänger 105, der folgende Tätigkeiten durchführt: Detektion der Bursts d.h. Telegramme oder Teildatenpakete, Erzeugung von I/Q Daten in Form eines I/Q Datenstroms, Abzweigen von I/Q Daten aus dem I/Q Datenstrom, Down-Sampling, Datendezimierung, Filterung, Zeit und/oder Frequenz-Synchronisation, Auswahl von Datenpaketen und/oder Dekodieren. Bevorzugt wird als Funkempfänger 105 ein Chip 110 in Form eines Standardfunkchips verwendet. Der Funkempfänger 105 umfasst einen Funk-Empfangspfad 104 mit einer ersten Antenne 101, einen Microcontroller 115, einen Decoder 112 sowie einen Speicher 106.

Bei dem Funkempfänger 105 handelt es sich um einen Funkempfänger des "Software Defined Radio"-Typs, kurz SDR-Typs. Derartige Chips werden auch "Service-on-a-System (SoC)"-Chips genannt, die als Massenware für unterschiedlichste Einsatzzwecke zur Verfügung stehen und für das Gateway 100 verwendet werden können. Nach dem Empfang der Funksignale durch die erste Antenne 101 und den Funk-Empfangspfad 104 werden die eingehenden Signale vom Microcontroller 115 zu I/Q Daten 113 verarbeitet. Auf Basis der I/Q Daten 113 kann als jeweilige Verarbeitungstätigkeit des Microcontrollers 115 ein Downsampling, eine Datendezimierung, eine Auswahl von Datenpaketen, eine Filterung, eine Zeit und/oder Frequenz-Synchronisation, und/oder ein Decodieren erfolgen.

Die vorstehend beschriebenen Verarbeitungstätigkeiten des Microcontrollers 115 des Chips 110 können bei Bedarf auch auf einen weiteren (in Fig. 2 nicht dargestellten) zweiten Microcontroller aufgeteilt werden. Dieser weitere Microcontroller kann sich auf einem physisch vom Chip 110 bzw. Microcontroller 115 getrennten weiteren Chip befinden. Dieser weitere Microcontroller kann auch durch eine Mehrzahl von Microcontrollern realisiert sein. Die Verarbeitung der I/Q Daten 113 in dem ersten Microcontroller 115 oder in dem ersten Microcontroller 115 und/oder zweiten Microcontroller erfolgt mit Hilfe von Algorithmen, die Rechenzeit und damit einen Verbrauch an elektrischer Energie verursachen.

Die für die Weiterleitung vorgesehenen, in dem Speicher 106 abgelegten Daten werden über eine Schnittstelle 107 einem Mobilfunktransmitter 108 zugeführt, der über eine zweite Antenne 103 verfügt. Der Mobilfunktransmitter 108 ist ebenfalls als eigenständiger Chip vorgesehen.

Die autarke Energieversorgung des Gateways 100 wird durch eine Batterie 109, insbesondere eine Longlife Batterie, sichergestellt. Eine solche Batterie verfügt über eine Betriebszeit von mehreren Jahren, vorzugsweise von mindestens zehn Jahren.

Alternativ kann als autarke Energiequelle auch eine Photovoltaikzellenanordnung 111 zur Energieversorgung vorgesehen sein.

Gemäß einer zweckmäßigen Ausgestaltung kann das Gateway 100 als Energieversorgung sowohl eine Batterie 109 aus auch eine Photovoltaikzellenanordnung 111 umfassen. Hierbei kann durch eine geeignete in den Zeichnungen nicht gezeigte Schaltung die Versorgung derart gesteuert werden, dass bei einer bestimmten Mindestmenge an über die Photovoltaikzellenanordnung 111 erzeugter elektrischer Energie der Funkempfänger 105 sowie der Mobilfunktransmitter 108 über die Photovoltaikzellenanordnung 111 betrieben werden. Wird über die Photovoltaikzellenanordnung 111 zu wenig elektrische Energie generiert, werden die vorgenannten Komponenten über die Batterie 109 versorgt.

Um einen ausreichenden Empfangsbetrieb des Gateways 100 bei gleichzeitiger Schonung der Batterie 109 zu ermöglichen, ist es erfindungsgemäß vorgesehen, dass trotz einer Detektion von eingehenden Bursts oder Signalen durch den Funkempfänger 105 Rechenoperationen des ersten Microcontrollers 115 bzw. des ersten Microcontrollers 115 und/oder zweiten Microcontrollers beim Vorliegen vorher festgelegter Empfangsszenarien abgebrochen oder zumindest in ihrem Umfang reduziert werden. Dies ist möglich, da der Funkempfänger 105 des "Software Defined Radio (SDR)"-Typs eine auf Software-Berechnungen per Algorithmen beruhende Signalverarbeitung der empfangenen Funksignale durchführt. Der Empfangsbetrieb des Gateways 100 geschieht nach der Erfindung mit der technischen Vorgabe, dass eine Berechnung nicht durchgeführt wird, obgleich eine Verarbeitung eines Eingangssignals zwar möglich oder nach einem Standardbetrieb (insbesondere eines Industriestandards) durchzuführen wäre, hierdurch aber ein das Energiebudget übermäßig beanspruchendes Maß an Energie verursacht werden würde. Hierdurch kann das Energiebudget des Gateways 100 über die Standzeit eingehalten werden. Zudem müssen keine Abstriche in der Kommunikationsfähigkeit des Funkempfangs, insbesondere bezüglich der Empfangsreichweite 102, gemacht werden.

Eine Reduzierung des Umfangs von Rechenoperationen des Microcontrollers 115 bzw. des ersten Microcontrollers 115 und/oder zweiten Microcontrollers erfolgt vorzugsweise durch eine Reduzierung von dessen Rechenzeit. Eine Reduzierung der Rechenzeit kann durch eine Reduzierung der Verarbeitung oder Nicht-Verarbeitung von sogenannten "false positives" erfolgen. Ein "false positive" liegt vor, wenn vom Funkempfänger 105 im Rahmen eines Algorithmus bei einer Überprüfung bezüglich eines eingehenden Signals zu Unrecht ("false") eine binäre Übereinstimmung von Kriterien ("positive") erkannt wird, obwohl dies nicht gegeben ist. Gerade "false positives" können in den lizenzfreien Frequenzbereichen häufig auftreten, da die Nutzungsdichte von Übertragungen in diesem Bereich sehr hoch ist.

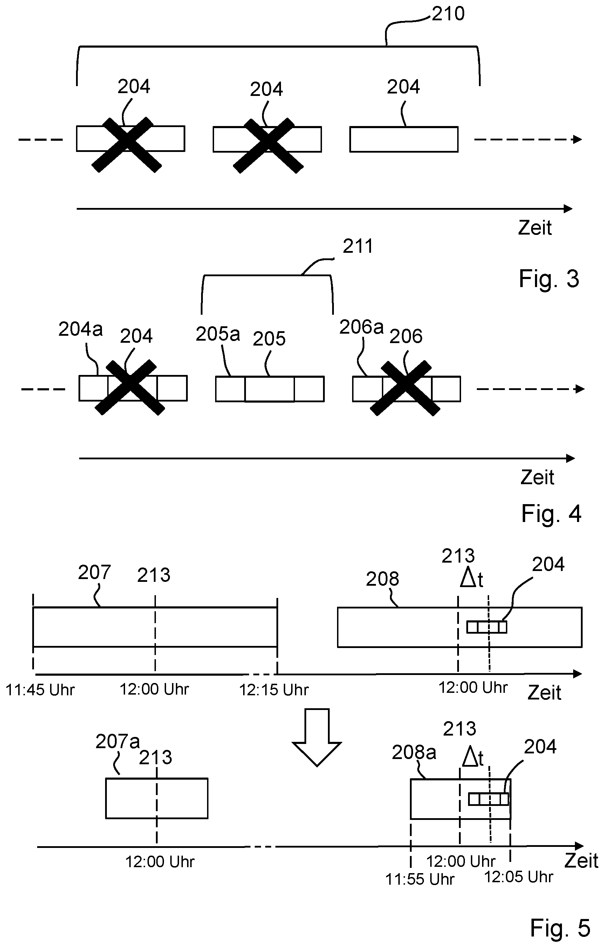

Eine weitere Möglichkeit zur Einsparung von Rechenzeit besteht darin, eine nach einem Standardbetrieb vorgesehene Verarbeitung von inhaltsgleichen (redundanten) Telegrammen 204, wie in Fig. 3 gezeigt, nicht durchzuführen. Inhaltsgleiche Telegramme 204 werden in dem sogenannten Multi-Burst-Mode 210 eines Funkbetriebs versendet, und zwar mit dem Ziel, die Empfangsqualität im Gateway 100 zu verbessern. Ein Multi-Burst-Mode 210 ist insbesondere bei LPWAN-Netzwerken vorgesehen. Bei diesen Netzwerken ist kein Rückkanal zum Sender des betreffenden Telegramms 204 vorhanden. Das Gateway 100 kommuniziert somit nicht zurück, dass ein Telegramm 204 angekommen ist oder nicht. Bei dem in Fig. 3 gezeigten Verfahren werden im Multi-Burst-Mode 210 jeweils drei inhaltsgleiche Telegramme 204 versendet und vom Gateway 100 empfangen. Verarbeitet wird davon jedoch lediglich ein Telegramm 204. Alternativ ist es auch möglich, von drei Telegrammen 204 lediglich zwei zu verarbeiten, falls die Empfangsqualität der Verarbeitung von einem Telegramm 204 nicht ausreichen sollte. Der Multi-Burst-Mode 210 wird vorzugsweise als Synchronmodus betrieben.

Eine weitere Möglichkeit zur Einsparung von Rechenzeit ist in Fig. 4 dargestellt. Hierbei handelt es sich um den sogenannten Single-Burst-Mode 211, bei dem die Information (Payload) über lediglich ein Datenpaket 204, 205 sowie 206 übertragen wird. Bei den in Fig. 4 dargestellten Telegrammen 204, 205 sowie 206 handelt es sich jeweils um Telegramme unterschiedlicher Funkknoten 200 des Netzwerks 214. Zur Reduzierung der Rechenzeit werden anhand der in dem jeweiligen Telegramm 204, 205, 206 enthaltenen ID des betreffenden Funkknotens 200 lediglich bestimmte Telegramm von interessierenden Funkknoten verarbeitet, andere jedoch nicht. In Fig. 4 wird lediglich das Telegramm 205 verarbeitet. Die ID des betreffenden Funkknotens 200 befindet sich in dem jeweiligen Header 204a, 205a bzw. 206a des betreffenden Telegramms 204, 205 bzw. 206.

Fig. 5 zeigt eine weitere Möglichkeit zur Reduzierung der Rechenzeit unter Einbeziehung einer Zeit-Offset-Information aus vorangegangenen, empfangenen Telegrammen 204. Der Funkempfänger 105 kann einen Zeit-Offset Δt eines Telegramms 204 erkennen und ist daher in der Lage, das Empfangsfenster 208, welches zu bestimmten Zeit, z.B. 12:00 Uhr, geöffnet wird, in seiner Breite zu einem Empfangsfenster 208a mit reduzierter Breite zu verringern, so dass das Telegramm 204 noch gerade innerhalb des Empfangsfensters 208a mit reduzierter Breite liegt. Hierdurch kann Rechenzeit eingespart werden.

Aus Fig. 5 wird ersichtlich, dass der Empfang von Telegrammen 204, wie bereits eingangs erwähnt, beispielsweise lediglich zu bestimmten Zeiten 213 erfolgt, sodass das Gateway 100 die Empfangsfenster 207, 208 entsprechend der Zeit 213 setzt. Beispielsweise öffnet das Empfangsfenster 207, 208 um 11:45 Uhr und schließt um 12:15 Uhr.

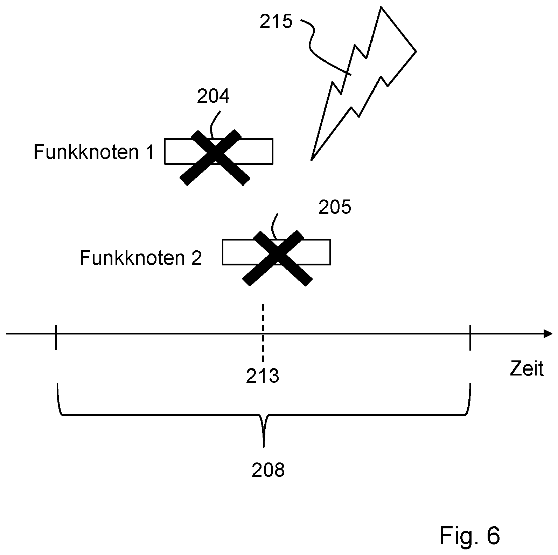

Fig. 6 zeigt eine weitere Möglichkeit zur Reduzierung der Rechenzeit, bei der das Gateway 100 erkennt, dass zwei Telegramme 204, 205 von zwei verschiedenen Funkknoten (Funkknoten 1, Funkknoten 2) innerhalb eines Empfangsfensters 208 sich gegenseitig stören oder ein Störsignal 215 vorliegt. Eine Verarbeitung der beiden Telegramme 204 sowie 205 wird in diesem Fall nicht durchgeführt, wodurch Rechenzeit eingespart werden kann. Zur Reduzierung der Verarbeitung oder Nicht-Verarbeitung von vom Funkempfänger zu erwartenden, kollidierenden Telegrammen 204, 205 unterschiedlicher Funkknoten wird vorher eine Kollisionsdetektion durchgeführt.

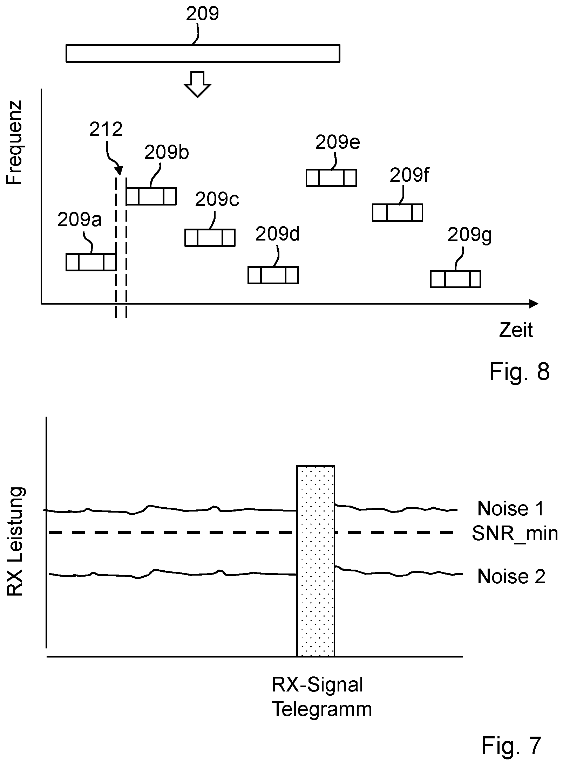

Eine Möglichkeit zur Reduzierung der Rechenleistung besteht auch darin, dass der Funkempfänger 105 das SNR von eingehenden Telegrammen 204 schätzt und bei einem zu geringen SNR eine Verarbeitung des betreffenden Telegramms 204 abbricht oder nicht vornimmt. In Fig. 7 wird ein Empfangssignal (RX-Signal) zwei unterschiedlichen Rauschgründen (Noise 1, Noise 2) gegenübergestellt. Bei dem ersten höheren Rauschgrund (Noise 1) liegt das SNR (Verhältnis von Signalpegel von RX-Signal zu Noise 1) unterhalb eines Schwellwerts von SNR_min. Bei diesem Telegramm bricht der Funkempfänger 105 die Verarbeitung ab bzw. führt eine Verarbeitung des Telegramms nicht durch. Bei dem zweiten, geringeren Rauschgrund (Noise 2) liegt das SNR (Verhältnis von Signalpegel von RX-Signal zu Noise 2) oberhalb des SNR_min. Dieses Telegramm wird vom Funkempfänger 105 weiterverarbeitet. Es erfolgt somit eine selektive Auswahl von Telegrammen hinsichtlich deren Verarbeitung oder Nicht-Verarbeitung anhand des jeweils geschätzten SNR.

Die vorliegende Erfindung betrifft die Übertragung von Telegrammen 204 in Form von Datenpaketen, die den zu übertragenden Payload vollständig enthalten.

Von der vorliegenden Erfindung umfasst sind jedoch auch Telegramme 209, die gemäß Fig. 8 nicht insgesamt, sondern in einzelnen Teildatenpaketen 209a-209g sukzessive nacheinander von dem jeweiligen Funkknoten 200 versendet werden und beim Gateway 100 so ankommen. Ein solches Telegramm 209 kann mindestens 24 Teildatenpaketen 209a-209g bestehen. Hierbei können die Teildatenpakete 209a-209g über unterschiedliche Frequenzkanäle übertragen werden. Zwischen den jeweiligen Teildatenpaketen 209a-209g ist jeweils eine kurze Pause 212 vorgesehen. Die Teildatenpakete 209a-209g werden im Funk-Empfangspfad 104 des Gateways 100 sukzessive verarbeitet, indem sie zu dem Telegramm 209 rekombiniert und die Information (Payload) daraus extrahiert wird.

Das Gateway 100 weist keinen Rückkanal zum jeweiligen Funkknoten auf. Gehen beim Funkempfänger 105 Telegramme ein, meldet das Gateway 100 nicht an den jeweiligen Funkknoten zurück, ob der Empfang des Telegramms erfolgreich war oder nicht.

Gemäß der Erfindung kann der Funkempfänger in einem Synchronmodus betrieben werden, bei dem der Zeitabstand zwischen zwei aufeinander folgenden Telegrammen oder Teildatenpaketen dem Funkempfänger bekannt ist. Der Zeitabstand kann dem Funkempfänger vorzugsweise durch eine Liste bzw. eine Lookup Table oder eine Formel bekannt sein. Der Abstand kann fest sein oder variieren.

Gemäß einer alternativen Ausgestaltung der Erfindung kann der Funkempfänger in einem Trackingmodus betrieben werden, bei dem ein Zeitpunkt oder mehrere Zeitpunkte, an dem bzw. denen ein Telegramm oder Teildatenpaket empfangen wurde, vom Funkempfänger benutzt wird, um einen nächsten Empfangszeitpunkt eines Telegramms oder Teildatenpakets desselben Senders zu bestimmen bzw. vorherzusehen. Außer zum gezielten Öffnen eines Empfangsfensters für kurze Zeit (vorzugsweise angepasst an die maximal mögliche Länge der Telegramme), empfängt der Funkempfänger nicht, ist also nicht "auf Empfang". Dadurch kann Energie ein gespart werden.

Gemäß einer weiteren alternativen Ausgestaltung der Erfindung kann der Funkempfänger in einem Akquisitionsmodus betrieben werden, bei dem ein Empfangsfenster geöffnet wird, ohne dass der Funkempfänger weiß, zu welchem Zeitpunkt von einem Sender Telegramme oder Teildatenpakete übertragen werden. Ein Empfangsfenster kann hierbei über einen Zeitraum geöffnet werden, der viel größer ist als die Telegramm- bzw. Teildatenpaketlänge. Die Information zu den Detektionszeitpunkten der Telegramme bzw. Teildatenpakete können im Trackingmodus verwendet werden. Auch Kombinationen der drei beschriebenen Modi untereinander sind möglich.

Gemäß einer vorteilhaften Ausgestaltung der Erfindung können ein kleiner und/oder stromsparender erster und/oder zweiter Mikrokontroller verendet werden.

Gemäß einer vorteilhaften Ausgestaltung der Erfindung können der erste und/oder zweite Mikrokontroller eine Taktfrequenz von weniger als 150 MHz aufweisen. Vorzugsweise kann der erste Mikrokontroller eine Taktfrequenz von gleich oder weniger als 80 MHz und der zweite Mikrokontroller eine Taktfrequenz von weniger als 150 MHz aufweisen.

Gemäß einer vorteilhaften Ausgestaltung der Erfindung können der erste und/oder zweite Mikrokontroller bei einer Spannung von 1,8 V einen Strom von weniger als 34 mA ziehen. Vorzugsweise kann bei einer Spannung von jeweils 1,8 V der erste Mikrokontroller einen Strom von weniger als 10 mA und der zweite Mikrokontroller einen Strom von weniger als 34 mA ziehen.

### BEZUGSZEICHENLISTE

- 100: Gateway
- 101: erste Antenne
- 102: Empfangsreichweite (Gateway)
- 103: zweite Antenne
- 104: Funk-Empfangspfad
- 105: Funkempfänger
- 106: Speicher
- 107: Schnittstelle
- 108: Mobilfunktransmitter
- 109: Batterie
- 110: Chip
- 111: Photovoltaikzellenanordnung
- 112: Decoder
- 113: I/Q Daten
- 114: Mobilfunkübertragung
- 115: Microcontroller

- 200: Funkknoten
- 201: Antenne
- 202: Versorgungsnetz
- 203: Uplink-Funkübertragung
- 204: Telegramm (Datenpaket)
- 204a: Header
- 205: Telegramm (Datenpaket)
- 205a: Header
- 206: Telegramm (Datenpaket)
- 206a: Header
- 207: Empfangsfenster
- 207a: Empfangsfenster mit reduzierter Breite
- 208: Empfangsfenster
- 208a: Empfangsfenster mit reduzierter Breite
- 209: Telegramm (Datenpaket)
- 209a-g: Teildatenpaket
- 210: Multi-Burst-Mode
- 211: Single-Burst-Mode
- 212: Pause
- 213: Stichzeit
- 214: Netzwerk
- 215: Störsignal

- 300: Mobilfunkempfangsstation

- 400: Computercloud
- 401: HeadEnd

- SNR-min: Grenzwert Signal/Rauschen

## Patentansprüche

1. Verfahren zum Betrieb eines energieautark betriebenen Funkempfängers (105) eines vorzugsweise stationären Gateways (100),
wobei der Funkempfänger (105) Telegramme (204, 205, 206, 209) in Form von Bursts von mindestens einem Funkknoten (200), vorzugsweise einer Anzahl X von Funkknoten (200) eines Netzwerks (214) empfängt und der Funkempfänger (105) Empfangsfenster (207, 207a, 208, 208a) für den Empfang öffnet,
wobei der Funkempfänger (105) für den energieautarken Betrieb von einer Batterie (109), vorzugsweise einer Longlife Batterie, und/oder von einer Photovoltaikzellenanordnung (111) mit elektrischer Energie versorgt wird,
wobei der Funkempfänger (105) ein mindestens einen Microcontroller (105) umfassender Funkempfänger des SDR-Typs ist, bei dessen Empfangsbetrieb die vom Funkempfänger (105) empfangenen Funksignale in I/Q Daten (113) umgewandelt und die I/Q Daten (113) mittels Rechenzeit verursachender Algorithmen weiterverarbeitet werden, **dadurch gekennzeichnet, dass**
trotz eines Empfangs von eingehenden Bursts oder Funksignalen durch den Funkempfänger (105) Rechenoperationen des Microcontrollers (105) beim Vorliegen von mindestens einem vorher festgelegten Empfangsszenario abgebrochen oder zumindest in ihrem Umfang reduziert werden.

2. Verfahren nach Anspruch 1, **dadurch gekennzeichnet, dass** eine Reduzierung des Umfangs von Rechenoperationen des mindestens einen Microcontrollers (105) durch eine Reduzierung von dessen Rechenzeit erfolgt.

3. Verfahren nach Anspruch 1 oder 2, **dadurch gekennzeichnet, dass** die Telegramme (204, 205, 206, 209) Telegramme eines Multi-Burst-Modes (210) des Funkbetriebs sind, bei dem beim Funkempfänger (105) mehrere einzeln decodierbare jedoch inhaltsgleiche Telegramme (204) ankommen, oder die Telegramme (209) jeweils in Teildatenpakete (209a-g) aufgeteilt und nacheinander versendet werden, so dass die Teildatenpakete (209a-g) jeweils als Burst beim Funkempfänger (105) ankommen.

4. Verfahren nach mindestens einem der vorhergehenden Ansprüche, **dadurch gekennzeichnet, dass**
eine Reduzierung der Verarbeitung oder Nicht-Verarbeitung von "false positives" erfolgt und/oder
eine Reduzierung der Verarbeitung oder Nicht-Verarbeitung von nicht oder nur teilweise lesbaren Telegrammen (204, 205, 206, 209) erfolgt und/oder
eine Reduzierung der Verarbeitung oder Nicht-Verarbeitung von inhaltsgleichen Telegrammen (204) erfolgt, und/oder
eine Reduzierung der Verarbeitung oder Nicht-Verarbeitung von Telegrammen (204, 205, 206, 209) bei zu niedrigem SNR erfolgt, und/oder
eine Reduzierung der Verarbeitung oder Nicht-Verarbeitung von, vorzugsweise vom Funkempfänger zu erwartenden, kollidierenden Telegrammen mindestens zweier unterschiedlicher Funkknoten (200) erfolgt, und/oder
eine Reduzierung der Verarbeitung oder Nicht-Verarbeitung von Telegrammen (204, 206) von nicht interessierenden Funkknoten (200) erfolgt, und/oder
eine Abtastung über in ihrer Breite reduzierte Empfangsfenster (207a, 208a) oder eine reduzierte Abtastbreite innerhalb eines Empfangsfensters (207, 208) erfolgt.

5. Verfahren nach Anspruch 4, **dadurch gekennzeichnet, dass** von drei inhaltsgleichen Telegrammen (204) nur zwei Telegramme (204) oder nur ein Telegramm (204) verarbeitet werden bzw. wird.

6. Verfahren nach Anspruch 4, **dadurch gekennzeichnet, dass** zur Reduzierung der Verarbeitung oder Nicht-Verarbeitung von, vorzugsweise vom Funkempfänger zu erwartenden, kollidierenden Telegrammen (204, 206) mindestens zweier unterschiedlicher Funkknoten (200) vorher eine Kollisionsdetektion durchgeführt wird.

7. Verfahren nach Anspruch 4, **dadurch gekennzeichnet, dass** die Reduzierung der Verarbeitung oder Nicht-Verarbeitung von Telegrammen (204, 206) von nicht interessierenden Funkknoten (200) auf Basis der in den Telegrammen (204, 205, 206, 209) enthaltene Funkknoten-ID erfolgt.

8. Verfahren nach Anspruch 7, **dadurch gekennzeichnet, dass** vom Funkempfänger (105) zur Feststellung, ob ein Telegramm von einem interessierenden oder nicht interessierenden Funkknoten stammt, die Funkknoten-ID im Header (204a, 205a, 206a) des betreffenden Telegramms (204, 205, 206) ausgelesen wird.

9. Verfahren nach Anspruch 4, **dadurch gekennzeichnet, dass** ein aus dem Empfang eines Telegrammes (207, 208) eines Funkknotens (200) sich ergebender Zeit-Offset (Δt) die Breite des reduzierten Empfangsfensters (207a, 208a) bestimmt.

10. Verfahren nach mindestens einem der vorhergehenden Ansprüche, **dadurch gekennzeichnet, dass** ein erster Mikrokontroller die empfangenen Funksignale in dem Funkempfänger (105) in I/Q Daten (113) umwandelt sowie einen I/Q Datenstrom erzeugt und I/Q Daten (113) zur Weiterverarbeitung in einem zweiten Mikrokontroller, vorzugsweise mittels eines Schalters, aus dem I/Q Datenstrom abgezweigt werden.

11. Verfahren nach mindestens einem der vorhergehenden Ansprüche, **dadurch gekennzeichnet, dass** die Telegramme (204, 205, 206, 209) bzw. Funksignale in einem ISM Frequenzband versendet werden.

12. Verfahren nach mindestens einem der vorhergehenden Ansprüche, **dadurch gekennzeichnet, dass** die Telegramme (204, 205, 206, 209) bzw. Funksignale im 868MHz Frequenzband versendet werden.

13. Verfahren nach mindestens einem der vorhergehenden Ansprüche 3 bis 12, **dadurch gekennzeichnet, dass** die Telegramme (209) als unterschiedlichen Frequenzkanälen zugeordnete Teildatenpakete (209a-g) vom Funkempfänger (105) sukzessive empfangen werden.

14. Verfahren nach mindestens einem der vorhergehenden Ansprüche, **dadurch gekennzeichnet, dass** das Gateway (100) keinen Rückkanal zum jeweiligen Funkknoten (200) aufweist.

15. Verfahren nach mindestens einem der vorhergehenden Ansprüche, **dadurch gekennzeichnet, dass** der Funkempfänger (105) in
einem Synchronmodus, bei dem der Zeitabstand zwischen zwei aufeinander folgenden Telegrammen (204, 205, 206, 209) oder Teildatenpaketen (209a-g) dem Funkempfänger (105) bekannt ist und/oder
einem Trackingmodus, bei dem ein Zeitpunkt oder mehrere Zeitpunkte, an dem bzw. denen ein Telegramm (204, 205, 206, 209) oder Teildatenpaket (209a-g) empfangen wurde, vom Funkempfänger (105) benutzt wird, um einen nächsten Empfangszeitpunkt zu bestimmen, und/oder
einem Akquisitionsmodus, bei dem ein Empfangsfenster geöffnet wird, ohne dass der Funkempfänger (105) weiß, zu welchem Zeitpunkt Telegramme (204, 205, 206, 209) oder Teildatenpakete (209a-g) übertragen werden, betrieben wird.
